# EUROPEAN PATENT APPLICATION

(11) **EP 2 211 053 A2**
(43) Date of publication of application: **28.07.2010**
(21) Application number: 09160833.1
(22) Date of filing: 20.05.2009
(51) Int. Cl.: F03D 1/04, F03D 7/02

(54) **Overload protection device for wind turbine generator**

(30) Priority: 22.01.2009 TW 98102641
(71) Applicant: Windtek Green Energy Technology Co., Ltd., Wai Pu Hsiang Hsien 438 (TW)
(72) Inventor: Yep, Yau-Chuen, Taichung Hsien 438 (TW)
(74) Representative: Beck & Rössig European Patent Attorneys

(57) **Abstract**

A wind turbine generator, comprising a nacelle having a rear casing and a empennage member. When the generator is facing a stronger wind, the pivot joint which pivotally installed in the skewed chute will drive the connected tail pipework to deflect automatically, and further drive the rotation seat and the nacelle which installed above the seat to rotate simultaneously. When the speed of the wind slows down, the pivot joint which is installed in the skewed chute will return to the normal position due to the inertial force, so as the nacelle will back to the normal position as well. In light of the structural description stated above, an overloaded burning of the windings of the generator which caused by the strong wind can be avoided, and a possibility of deformation or damage to the blades and the stationary tower can be reduced.

## Description

### BACKGROUND OF THE INVENTION

### 1. Field of the Invention

The present invention relates to a protection device. More particularly, the present invention relates to a device used in a wind turbine generator.

### 2. Description of Related Art

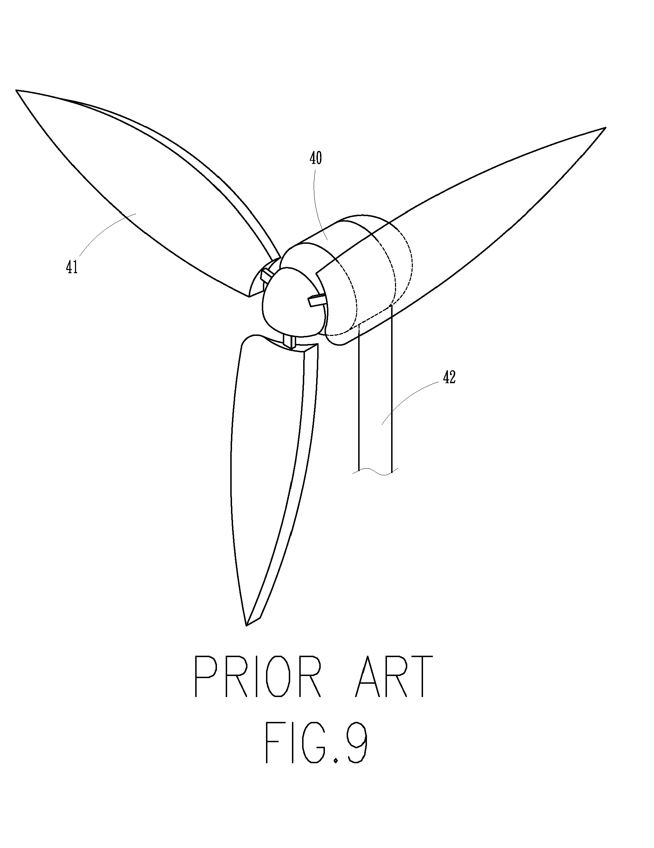

A conventional wind turbine generator as shown in Fig. 9 comprises a nacelle 40, multiple blades 41 and a stationary tower 42, wherein the multiple blades 41 are assembled to the position of the nacelle 40 where against the blow wind, and the stationary tower 42 is supported underneath the nacelle 40 and firmly stands on the ground.

However, the conventional wind turbine generator has contained some improvable defects, such as:
1. Unstable power output: When the speed of the wind is increased significantly, the rotational speed of the blades will rise due to the incidental high speed of wind, and that could result in the burning of the generator windings because of the overload by outputting high electric power for the windings; and
2. Unpredictable damage to the structure: The blades and the stationary tower of the wind turbine generator are easily deformed or damaged when they are facing incidental strong wind, thus the damage is unpredictable.

The present invention is intended to improve the above mentioned drawbacks of the conventional wind turbine generator. The present invention provides improved solutions to the problems of unstable power output and unpredictable damage to the structure which may cause.

### SUMMARY OF THE INVENTION

The primary purpose for the present invention is to provide a protection device for a wind turbine generator, comprising a nacelle having a rear casing and a empennage member, wherein a skewed chute is provided at the end of the rear casing which comprises an open end and a stop end at both sides of the skewed chute respectively, the open end and the stop end are disposed at an angle, and a rotation seat is installed underneath the rear casing eccentrically. Furthermore, the empennage member comprises a pivot joint and a tail pipework, wherein the pivot joint further comprises a joint portion and a connecting portion, the joint portion is fastened into the skewed chute of the rear casing pivotally, and the connecting portion is connected to the tail pipework. When the generator is facing the stronger wind, the pivot joint which is pivotally installed in the skewed chute will drive the connected tail pipework to deflect automatically, and further drive the rotation seat and the nacelle which installed above the seat to rotate simultaneously. When the speed of the wind slows down, the pivot joint which is installed in the skewed chute will return to the normal position due to the inertial force, so as the nacelle will back to the normal position as well. In light of the structural description stated above, an overloaded burning of the windings of the generator which caused by the strong wind can be avoided, and a possibility of deformation or damage to the blades and the stationary tower can be reduced too.

### BRIEF DESCRIPTION OF THE DRAWINGS

Fig. 1 is a perspective view schematically showing the wind turbine generator of the present invention;
Fig. 2 is a segmented view schematically showing the wind turbine generator of the present invention;
Fig. 3 is a segmented view schematically showing the empennage member of the present invention;
Fig. 4 is a rear side view schematically showing the wind turbine generator of the present invention;
Fig. 5 is the sectional views schematically showing the operating movements of the present invention;
Fig. 6 is the perspective views schematically showing the operating movements of the wind turbine generator when facing the strong wind;
Fig. 7 is the perspective views schematically showing the operating movements of the wind turbine generator when the wind slows down;
Fig. 8 is a rear side view schematically showing the another aspect of the present invention; and
Fig. 9 is a perspective view of the conventional wind turbine generator.

### DETAILED DESCRIPTION OF PREFERRED EMBODIMENT

While this invention is capable of embodiment in many different forms, what is shown in the drawings and described in detail herein is the preferred embodiment of the invention. The preferred embodiment is disclosed with the understanding that the present description is but one example of the principles of the invention and is not intended to limit the broad aspects of the invention to the single embodiment illustrated.

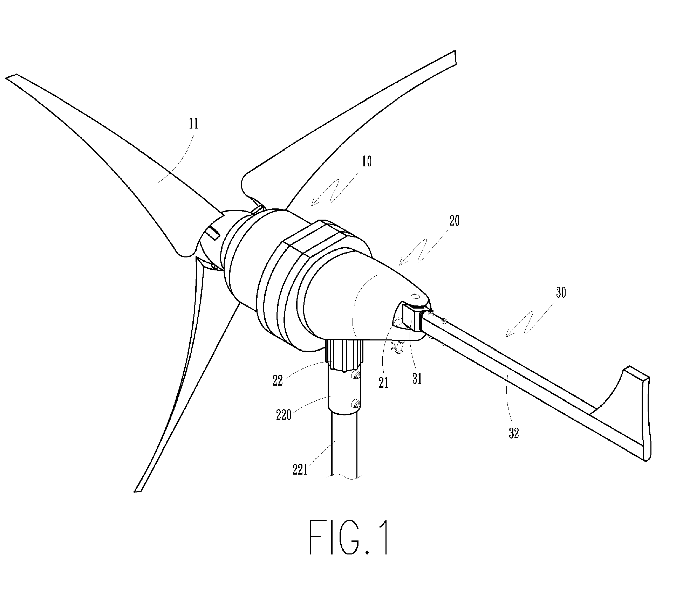

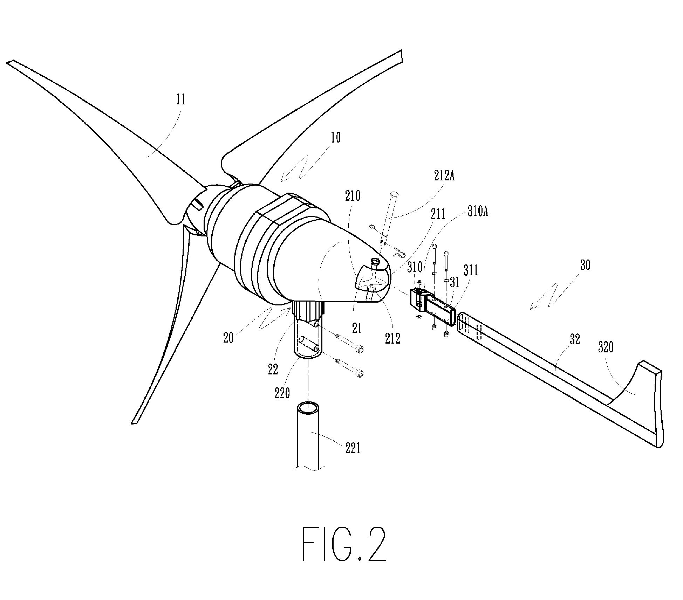

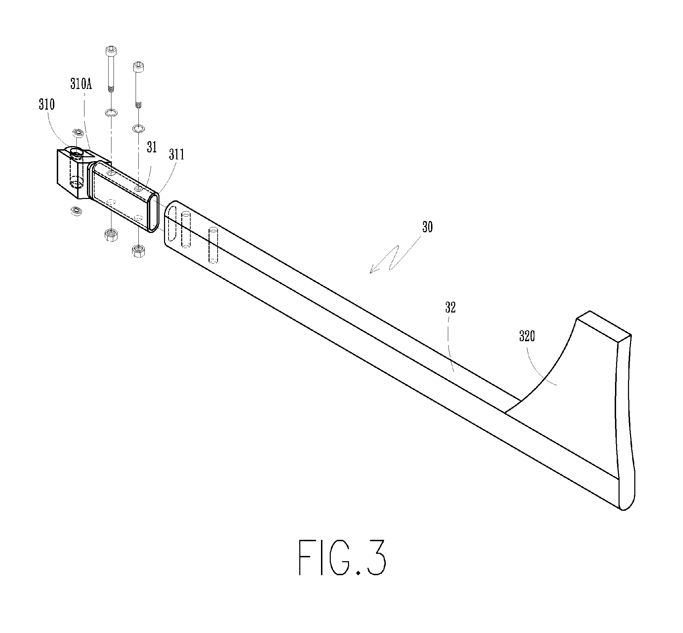

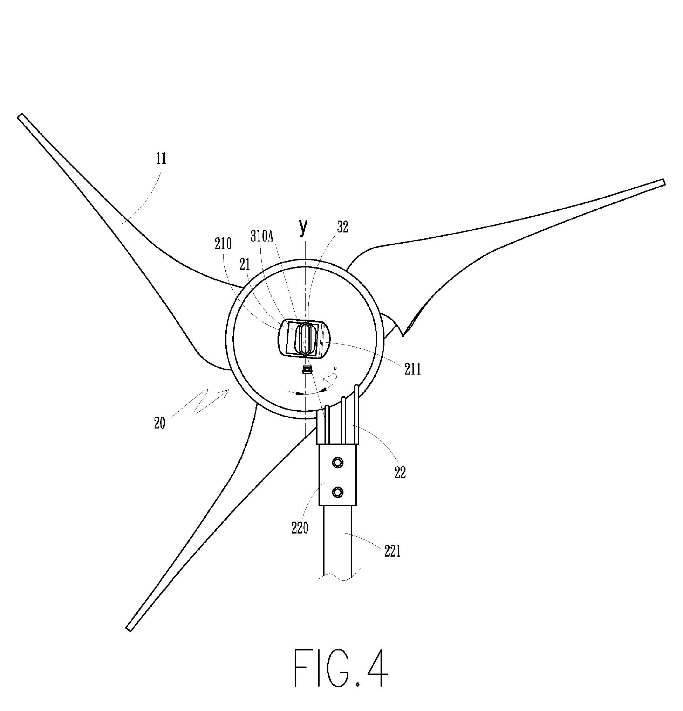

Figs. 1 to 4 are perspective, segmented and rear side views schematically showing a preferable embodiment of the present invention.

The wind turbine generator comprises:
a nacelle 10 having a number of blades 11;
a rear casing 20 having a skewed chute 21 provided at the end of the rear casing 20, wherein an open end 210 and a stop end 211 are provided at both sides of the skewed chute 21 respectively, and the open end 210 and the stop end 211 are disposed at an angle of 1°∼15° relative to the vertical axis. A pair of pivot holes 212 are penetrated on the position of skewed chute 21, and a pivot fastener 212A is fastened to said pivot holes 212. A rotation seat 22 is installed underneath the rear casing 20 eccentrically, a connecting end 220 is provided at the bottom of the rotation seat 22 which is used for connecting with a tower pole 221. Moreover, the rear casing 20 is assembled with the nacelle 10; and
an empennage member 30 comprising a pivot joint 31 and a tail pipework 32, wherein the pivot joint 31 further comprises a joint portion 310 and a connecting portion 311; meanwhile, a buffer portion 310A is provided around the pivot joint 31, and the pivot joint 31 is fastened into the skewed chute 21 of the rear casing 20 pivotally. A tail fin 320 is also provided at the end of the pipework 32, and the pipework 32 is connected with the connecting portion 311 of the pivot joint 31. Two bearings are fixed at the two sides of the front end of the joint portion 310, and the joint portion 310 is connected to the skewed chute 21 at the position where is relative to pivot holes 212, in order for the pivot fastener 212A to fasten them together pivotally.

In light of the structural description stated above, the present invention fulfills a wind turbine generator thereof.

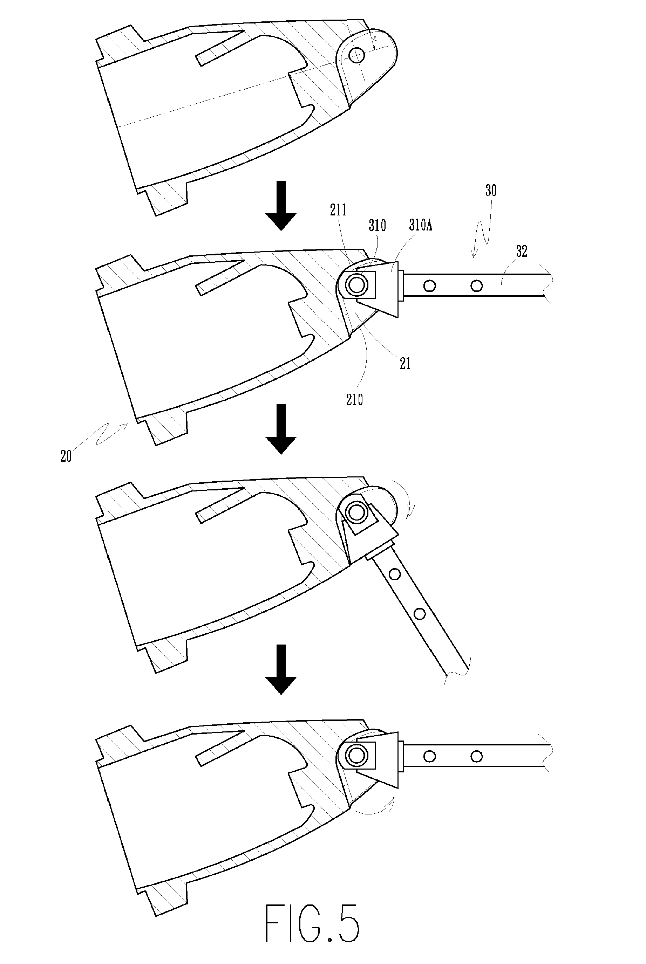

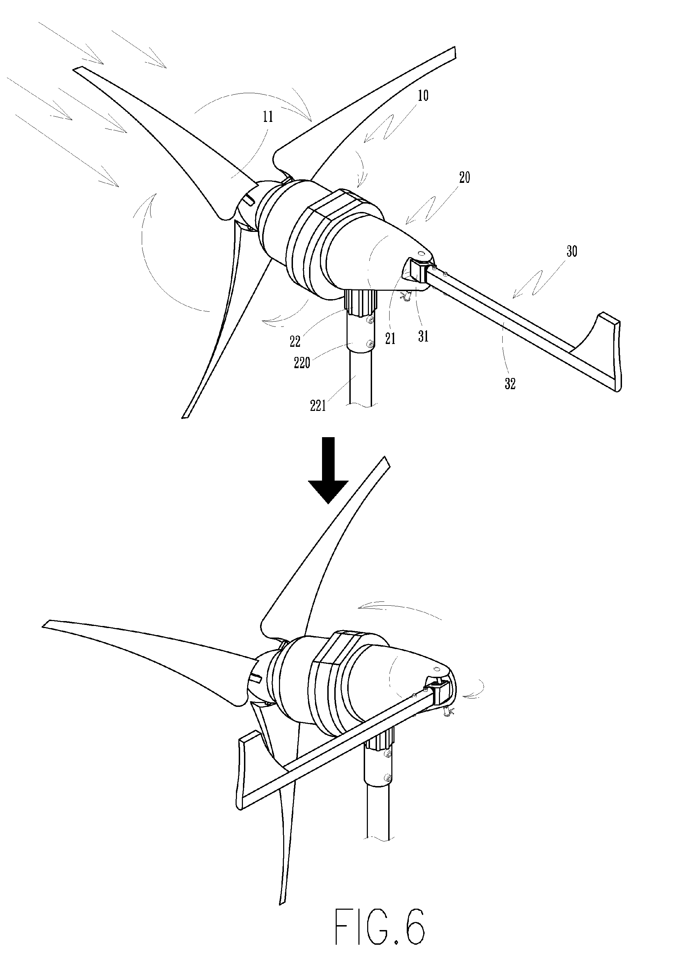

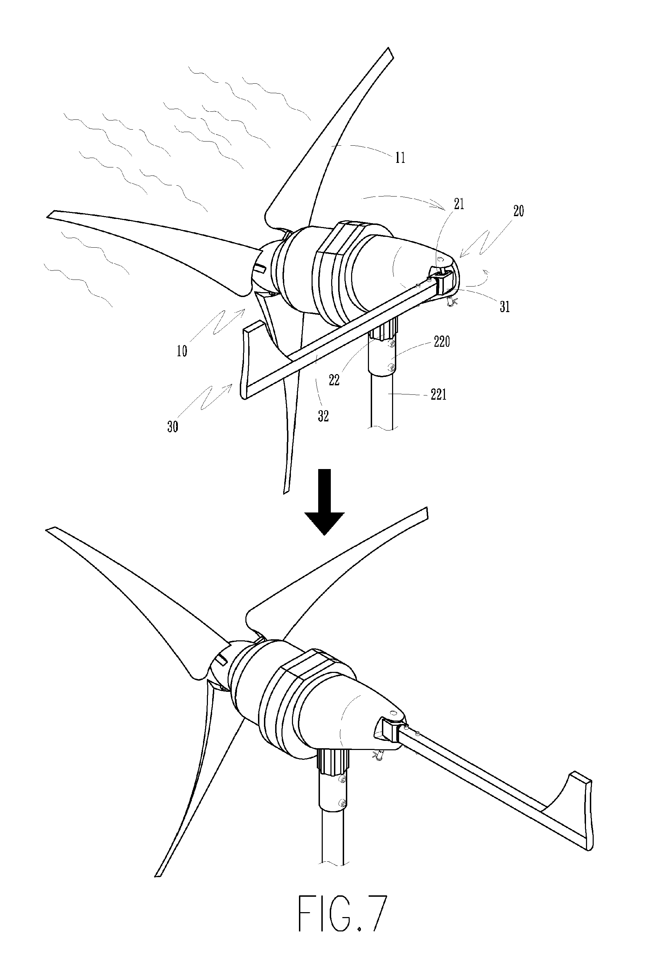

Figs. 5 to 7 are the sectional and perspective views schematically showing the operating movements of the present invention. When the nacelle 10 is facing a stronger wind, the pivot joint 31 which is pivotally installed in the skewed chute 21 will drive the connected tail pipework 32 to deflect automatically, and further drive the rotation seat 22 and the nacelle 10 which installed above the seat 22 to rotate simultaneously. In addition, due to the protection of the buffer portion 310A which is surrounded the pivot joint 31, so as the rear casing 20 can prevent from the impact or abrasion when the empennage member 30 is deflected. When the speed of the wind slows down, the pivot joint 31 which is installed in the skewed chute 21 will return to the normal position due to the inertial force, and because the design of the stop end 211 which located at the one side of the skewed chute 21 can stop the return movement of the pivot joint 31, so that the nacelle 10 will be driven back to the original horizontal position. In light of the structural description stated above, an overloaded burning of the windings of the nacelle 10 which caused by the strong wind can be avoided, and a possibility of deformation or damage to the blades 11 and the tower pole 221 can be reduced.

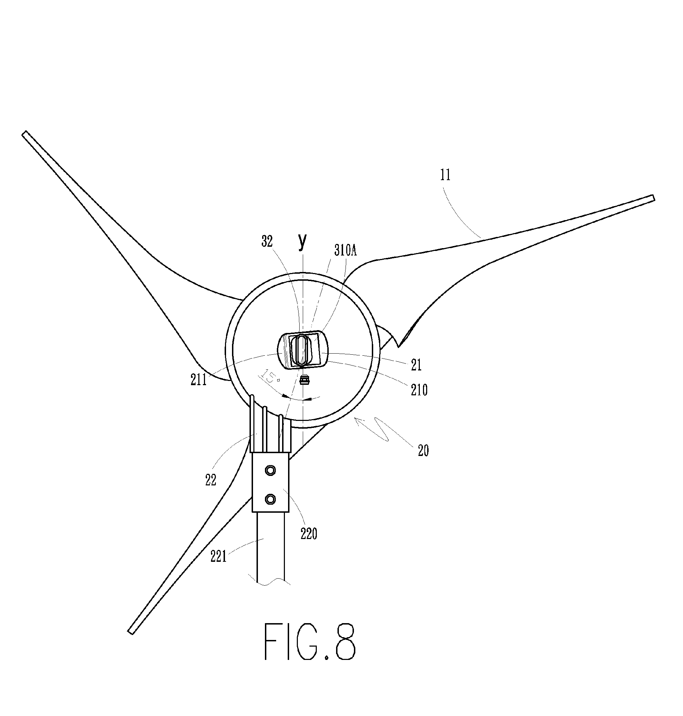

Referring to Fig. 8 is a rear side view schematically showing another aspect of the present invention. It is similar to the structure as shown in Figs. 1 to 4, the only difference is that the skewed chute 21 located at the other side of the rear casing 20, wherein the skewed chute 21 is also disposed at an angle of 1°∼15° relative to the vertical axis. Likewise, the pivot joint 31 of the empennage member 30 is connected with the skewed chute 21 which located at the other side of the rear casing 20, and the joint portion 310 of the pivot joint 31 is connected to the skewed chute 21 at the position where is relative to pivot holes 212, in order for the pivot fastener 212A to fasten them together pivotally.

In the light of the above, the advantages of the present invention include:
1. Stable power output: When the blades 11 of the nacelle 10 are facing the stronger wind, the pivot joint 31 which pivotally installed in the skewed chute 21 will drive the connected tail pipework 32 to deflect automatically, and further drive the rotation seat 22 and the nacelle 10 which installed above the seat 22 to rotate simultaneously. Therefore, the strength of the wind which applies to the blades 11 is significantly reduced, thereby the overloaded burning of the windings of the nacelle 10 which caused by the strong wind could be avoided; and
2. Protection of structure: When the blades 11 of the nacelle 10 are facing the stronger wind, the pivot joint 31 which pivotally installed in the skewed chute 21 will drive the connected tail pipework 32 to deflect automatically, and further drive the rotation seat 22 and the nacelle 10 which installed above the seat 22 to rotate simultaneously. Therefore, the strength of the wind which applies to the blades 11 is significantly reduced, thereby the possibility of deformation or damage to the blades 11 and the tower pole 221 could be reduced.

Although numerous characteristics and advantages of the present invention have been described in detail in the foregoing description, together with the structure and function of the invention, this disclosure is only one of the examples, and changes may be made with regard to specific details, particularly to shape, size, and arrangement of parts within the invention to the full extent indicated by the general meaning of the terms in which the appended claims are expressed.

## Claims

1. A wind turbine generator, comprising:
a nacelle (10);
a rear casing (20) having a skewed chute (21) provided at the end of the rear casing (20), wherein an open end (210) and a stop end (211) are provided at both sides of the skewed chute (21) respectively, and the open end (210) and the stop end (211) are disposed at an angle; a rotation seat (22) is installed underneath the rear casing (20) eccentrically, and connected with a tower pole (221); moreover, the rear casing (20) is assembled with the nacelle (10); and
an empennage member (30) comprising a pivot joint (31) and a tail pipework (32), wherein the pivot joint (31) further comprises a joint portion (310) and a connecting portion (311), the pivot joint (31) is fastened into the skewed chute (21) of the rear casing (20) pivotally; the pipework (32) is connected with the connecting portion (311) of the pivot joint (31), and the joint portion (310) is connected to the skewed chute (21) of the rear casing (20) pivotally.

2. A wind turbine generator as claimed in claim 1, wherein the open end (210) and the stop end (211) are disposed at an angle of 1°∼15° relative to the vertical axis.

3. A wind turbine generator as claimed in claim 1 or 2, wherein a pair of pivot holes (212) are penetrated on the position of skewed chute (21), and a pivot fastener (212A) is fastened to said pivot holes (212); the joint portion (310) of the pivot joint (31) is connected to the skewed chute (21) at the position where is relative to pivot holes (212), in order for the pivot fastener (212A) to fasten them together pivotally.

4. A wind turbine generator as claimed in one of claims 1 to 3, wherein two bearings are fixed at the two sides of the front end of the joint portion (310).

5. A wind turbine generator as claimed in one of claims 1 to 4, wherein a connecting end (220) is provided at the bottom of the rotation seat (22) which is used for connecting with the tower pole (221).

6. A wind turbine generator as claimed in one of claims 1 to 5, wherein a buffer portion (310A) is provided around the pivot joint (31).
